# EUROPÄISCHE PATENTSCHRIFT

(11) **EP 2 633 166 B1**
(45) Veröffentlichungstag und Bekanntmachung des Hinweises auf die Patenterteilung: **25.11.2015**
(21) Anmeldenummer: 11773836.9
(22) Anmeldetag: 13.09.2011
(51) Int. Cl.: F02B 75/22, F02B 63/04

(54) **MASCHINENKOMBINATION MIT EINER VERBRENNUNGSKRAFTMASCHINE UND EINEM GENERATOR**
MACHINE COMBINATION COMPRISING AN INTERNAL COMBUSTION ENGINE AND A GENERATOR
COMBINAISON DE MACHINES COMPRENANT UN MOTEUR À COMBUSTION INTERNE ET UN GÉNÉRATEUR

(30) Priorität: 29.10.2010 CH 18132010
(43) Veröffentlichungstag der Anmeldung: 04.09.2013
(73) Patentinhaber: Obrist Technologies GmbH, 6890 Lustenau (AT)
(72) Erfinder: OBRIST, Frank, A-6900 Bregenz (AT); PRÄSENT, Bernd, A-8750 Oberweg (AT)
(74) Vertreter: Kilchert, Jochen
(86) Internationale Anmeldenummer: PCT/IB2011/002147
(87) Internationale Veröffentlichungsnummer: WO 2012/056275

(56) Entgegenhaltungen:
- JP-A- 60 045 727
- JP-A- 63 097 829
- JP-A- 2003 083 105
- JP-A- 2003 120 317
- JP-U- H0 457 636
- US-A- 4 331 111
- US-A1- 2002 023 599
- US-A1- 2009 107 426

## Beschreibung

Die Erfindung betrifft eine Maschinenkombination mit einer Verbrennungskraftmaschine und einem Generator für die Aufladung der Batterie eines Hybridantriebs, bei der die Verbrennungskraftmaschine ein Paar von in einem gemeinsamen Gehäuse eingeschlossenen Zylinder-Kolbeneinheiten aufweist, deren beide Kolben über eine Pleuelstange mit je einer eigenen Kurbelwelle in Antriebsverbindung stehen und beide Kurbelwellen über je ein Zahnrad gegenläufig miteinander drehverbunden sind,

Eine für einen Motorradantrieb bestimmte Verbrennungskraftmaschine der genannten Art ist bekannt durch die GB 584215. Da sowohl die beiden Kolben als auch die beiden Ausgleichsgewichte ihrer parallel zueinander verlaufenden Kurbelwellen in Wellenlängsrichtung zueinander versetzt angeordnet sind, sind die Massenkräfte einer solchen Maschine für einen ruhigen Lauf nicht ausgeglichen und für eine direkte Kopplung mit einem Generator wenig geeignet. Die US 2009/0107426 zeigt eine Verbrennungskraftmaschine mit einem Generator. Der Erfindung liegt die Aufgabe zugrunde eine Maschinenkombination der eingangs genannten Art zu finden, die eine besonders ruhige, d.h. geräuscharme und erschütterungsfreie Arbeitsweise ihrer Verbrennungskraftmaschine aufweist und die auf einfache Weise eine Ausführung mit besonders geringen Reibungsverlusten ermöglicht, so dass sie durch spontanes Startverhalten und geringe Verschleissanfälligkeit besonders gut für den Intervallbetrieb eines Hybridantriebs geeignet ist. Ausserdem soll sie sich in raumsparender und einfach herstellbarer Bauweise mit dem Generator eines Hybridantriebs zu einer kompakten Baueinheit verbinden lassen, so dass für ihre Anordnung in einem Fahrzeug neue Möglichkeiten gegeben sind.

Die Lösung der genannten Aufgabe erfolgt erfindungsgemäss aufgrund der kennzeichnenden Merkmale des Patentanspruchs 1.

In bevorzugter Ausführungsform der Erfindung haben die zueinander parallelen Zylinderachsen der Verbrennungskraftmaschine zur Bildung einer nach innen gerichteten Schränkung einen geringeren Abstand voneinander als dem Abstand zwischen den Achsen beider Kurbelwellen entspricht. Diese Bauweise trägt einerseits zu kleineren Dimensionen der Maschine bei und bewirkt andererseits eine Verringerung der maximalen Querkräfte an den Kolben und damit eine geringere Kolbenreibung und geringeren Verschleiss an der Zylinderwandung.

Weiterhin ermöglicht die Zuordnung von je einer Kurbelwelle zu einer Zylinder-Kolbeneinheit, dass in vorteilhafter Ausführungsform der Erfindung beide Kurbelwellen reibungsarm in Wälzlagern gelagert sind, so dass ein spontanes Starten der Maschine mit besonders geringem Reibungswiderstand und geringer Verschleissanfälligkeit erfolgt und folglich eine besonders gute Eignung für den Intervallbetrieb eines Hybridantriebs gegeben ist.

Die besondere Eignung für den Intervallbetrieb eines Hybridantriebs kann in weiterer Ausführungsform der Erfindung dadurch verbessert werden, dass das Gehäuse der Verbrennungskraftmaschine neben den für solche Maschinen üblichen Massnahmen zur Temperaturregelung eine thermische Isolierung aufweist. Eine solche Isolierung gewährleistet, dass auch nach relativ langen Betriebsunterbrüchen ein Kaltstart vermieden wird. Ausserdem trägt eine solche thermische Isolierung zur weiteren Reduzierung von Arbeitsgeräuschen der Maschine bei.

Die Möglichkeit für eine weitgehend unabhängige Anordnung der kompakt bauenden erfindungsgemässen Maschinenkombination kann dadurch verbessert werden, dass in dem kompakten Maschinengehäuse das System einer Trockensumpfschmierung vorgesehen wird.

Weiterhin kann der Wirkungsgrad der Kraftmaschine einer solchen Maschinenkombination dadurch verbessert werden, dass sie drosselklappenfrei für einen Vollastbetrieb ausgeführt ist, indem ihr Betriebszustand durch ihre in Abhängigkeit von der Leistungsaufnahme der stromerzeugenden Elektromaschine zugesteuerte Treibstoffzufuhr bestimmt ist.

In der Ausgestaltung der Erfindung ist der Zylinderkopf und das für die zwei Kurbelwellen vorgesehen Kurbelgehäuse als einheitliches Gusstück geformt, so dass eine Zylinderkopfdichtung und Zylinderkopfschrauben vermieden werden Streiden einen überflüssigen Pundt.

Weitere vorteilhafte Ausgestaltungen und Anwendungen der Erfindung sind Gegenstand von abhängigen Patentansprüchen und der folgenden Beschreibung anhand der Zeichnungen zu entnehmen. Es zeigt:
Fig.1 eine separate Darstellung der gegenläufigen Kurbelwellen einer erfindungsgemässen Maschine, mit ihrer Zahnradverbindung und den zugehörigen Pleueln und Kolben,
Fig.2 eine schematische Darstellung der Anordnung nach Fig.1 mit durch das Gehäuse der Maschine geführten, bzw. in dieses eingegossenen Ein- und Auslasskanäle und zugehörigen Ventilschäften,
Fig.3 eine schematisch dargestellte Aufsicht auf die Anordnung nach Fig.2,
Fig.4 eine separate, schematische Darstellung einer Nockenwellensteuerung der zwei Zylinder-Kolbeneinheiten einer erfindungsgemässen Maschine,
Fig.5 eine Darstellung einer Kombination von Antriebskomponenten einer Maschine entsprechend Fig. 1 bis 4 mit einem in gleicher Reihe angeordneten Generator,
Fig.6 die Anordnung nach Fig.5 mit der Ventilsteuerung nach Fig.4 und einem Zahnriemenantrieb für eine Saugpumpe und eine Ölpumpe einer Trockensumpfschmierung,
Fig.7 eine Gesamtansicht einer reihenförmigen Kombination aus Verbrennungskraftmaschine und Generator,
Fig.8 eine Gesamtansicht auf die gegenüberliegenden Seite der Maschinenkombination nach Fig. 7,
Fig.9 eine separate Ansicht zu Veranschaulichung der nach innen versetzten, geschränkten Anordnung der Zylinderachsen relativ zu den Achsen der zugehörigen Kurbelwellen,
Fig.10 eine schmalseitige Ansicht einer die Maschine einschliessenden, isolierenden Gehäuseschale in schematischer Darstellung,
Fig.11 eine Seitenansicht der Gehäuseschale nach Fig.10 und
Fig. 12 eine Gesamtansicht einer Kombination aus Verbrennungskraftmaschine und Generator bei seitlicher Anordnung des Generators relativ zu der Verbrennungskraftmaschine (nicht Teil der Erfindung gemäß den Ansprüchen).

Die im Folgenden als Maschine 1 bezeichnete Verbrennungskraftmaschine mit innerer Verbrennung hat zwei parallel zueinander in einem gemeinsamen Gehäuse 2 angeordnete, in Viertaktarbeitsweise gesteuerte Zylinder-Kolbeneinheiten, deren Hubkolben 3,4 über je eine Pleuelstange 5,6 mit jeweils einer eigenen Kurbelwelle 7,8 in Antriebsverbindung stehen. Diese stehen ihrerseits über ein an ihnen gleichachsig befestigtes Zahnrad 9,10 gegenläufig in Antriebsverbindung, so dass sich ihre oszillierenden Massenkräften gegenseitig aufheben und die Maschine 1 ohne Verwendung einer Ausgleichswelle schwingungsfreie arbeitet. Hierzu ist die Drehposition der Kurbel 11,12 und diejenige der Ausgleichsgewichte 13,14 einer der Kurbelwellen 7 gegenüber derjenigen der anderen Kurbelwelle 8 um 180° versetzt. Folglich bewegen sich die auf sie einwirkenden Hubkolben 3,4 parallel zueinander. Für eine gleichmässige Arbeitsweise sind die zugehörigen Arbeitstakte beider Zylinder-Kolbeneinheiten im Abstand von einer 360° Kurbelwellendrehung gesteuert, so dass parallel zum Arbeitstakt eines der Kolben 3 der andere Kolben 4 im Ansaugtakt arbeitet.

Die Lagerung der Kurbelwellen 7, 8 erfolgt in jeweils zwei Wälzlagern 15, 16 und 17, 18, so dass die Maschine geringe Reibungswiderstände aufweist und sich besonders für einen Intervallbetrieb eignet.

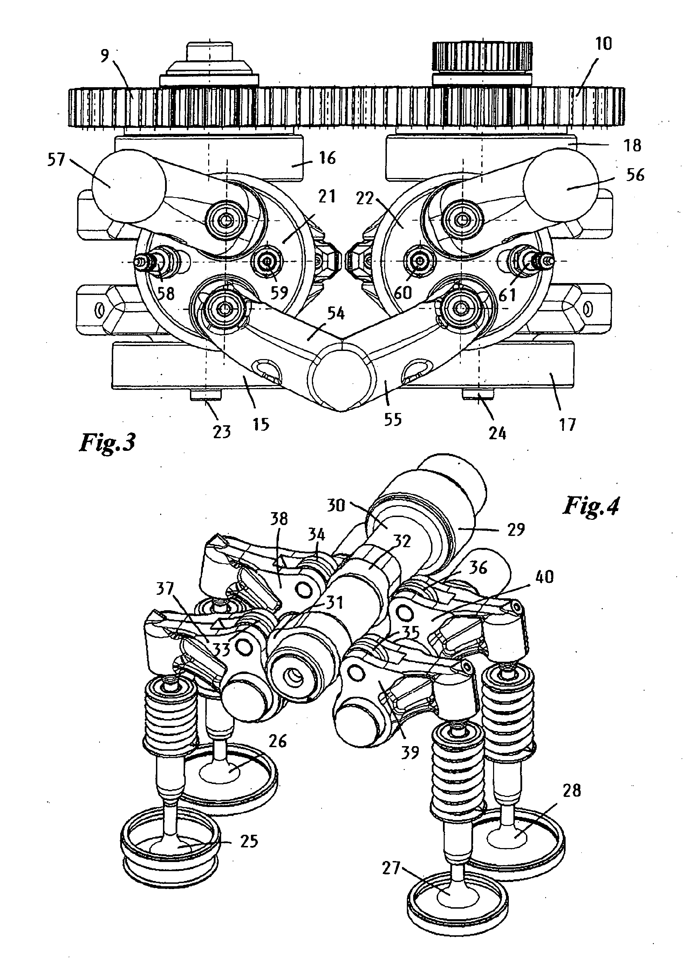

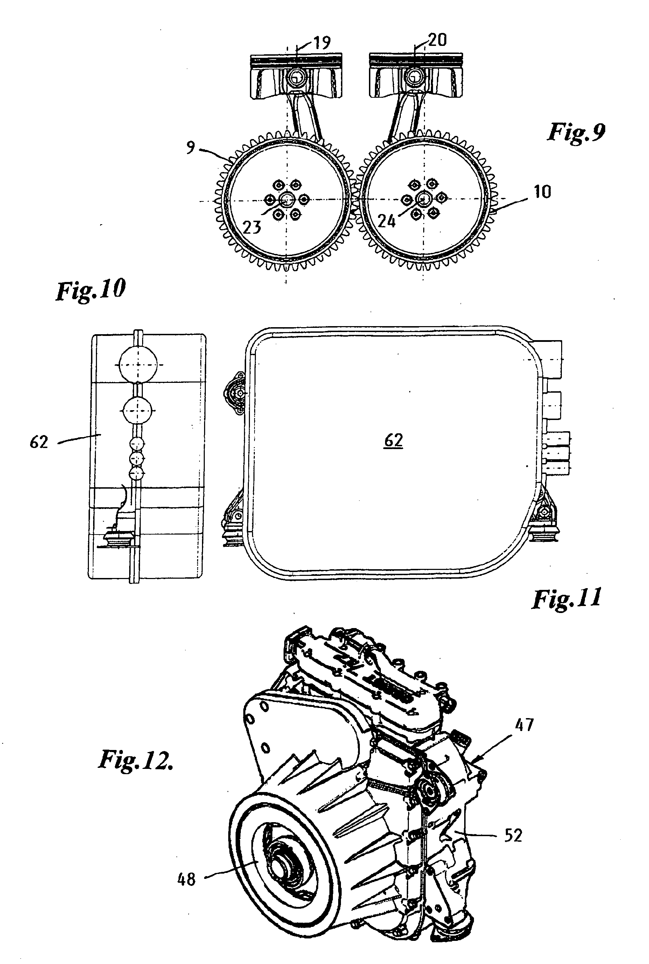

Eine weitere Verminderung von Reibungsverlusten wird durch eine Schränkung des zuvor beschriebenen Kurbeltriebes erreicht, wie sie durch die Darstellung in Fig.3 und Fig.9 gezeigt ist. Dadurch, dass die zueinander parallelen Achsen 19,20 der in Fig.3 gezeigten Zylinder 21,22 zur Bildung einer nach innen gerichteten Schränkung einen geringeren Abstand voneinander haben, als dem Abstand zwischen den Achsen 23,24 beider Kurbelwellen entspricht, haben die Pleuelstangen 5,6 im Moment der grössten Krafteinwirkung eine steilere Position als ohne eine solche Schränkung, so dass am Kolben entsprechend geringere, die Kolbenreibung und den Zylinderverschleiss beeinflussende Querkräfte auftreten. Ausserdem trägt die für diese Schränkung vorgesehene engere Anordnung der Kolben-Zylindereinheiten nebeneinander zur kompakteren Bauweise der Maschine 1 bei.

Ein weiterer Beitrag zu besonders geringen Reibungsverlusten der Maschine 1 ergibt sich durch die Verwendung einer die Ventile 25 bis 28 beider Zylinder-Kolbeneinheiten steuernden, zentralen, ebenfalls in einem Wälzlager 29 gelagerten Nockenwelle 30. Der Abgriff der beiden Nocken 31,32 der Nockenwelle 30 erfolgt reibungsarm jeweils über Abgriffsrollen 33 bis 36, die an einem Hebelarm von zweiarmigen, für jedes Ventil vorgesehenen Kipphebeln 37 bis 40 gelagert sind.

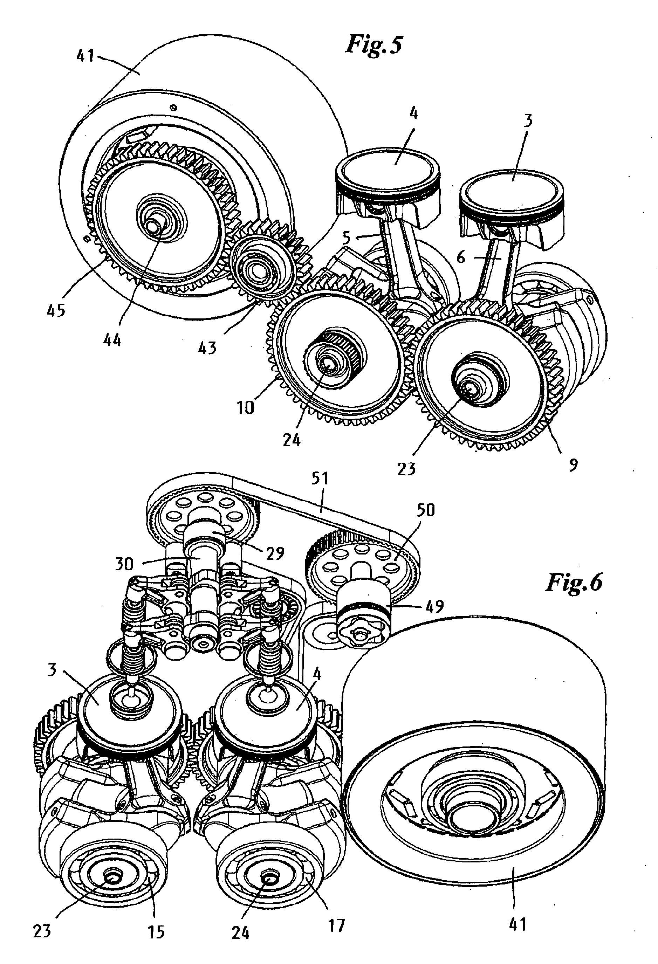

Die Darstellungen der Fig.5 bis 8 veranschaulichen, wie eine erfindungsgemässe Maschine 1 sich besonders kompakt mit einem Generator 41 zu einer Maschinenkombination 42 vereinigen lässt, um als Energiequelle für einen Hybridantrieb zu dienen. Die besonders kompakte Bauweise einer solchen Maschinenkombination 42 wird über die beide Kurbelwellen 7,8 miteinander verbindenden Stirnzahnräder 9,10 möglich, indem eines dieser Zahnräder 10 direkt oder über ein Zwischenzahnrad 43 in Antriebsverbindung mit einem auf der Welle 44 des Generators 41 befestigten Stirnzahnrad 45 steht. Die Darstellungen der Fig.5 bis Fig.8 veranschaulichen die dadurch mögliche flache und kompakte Bauweise einer solchen, in einem gemeinsamen, einstückig geformten Gehäuse 46 vereinigten Maschinenkombination 42.

Anstatt einer länglichen, flachen Maschinenkombination 42 kann aufgrund der in der Maschine 1 vorgesehenen Zahnräder 9,10 auch eine besonders kompakte Maschinenkombination 47 entsprechend der Darstellung in Fig.12 verwirklicht werden, indem ein Zahnrad des Generators 48 anstatt in Reihe mit den Zahnrädern 9,10 der Maschine 1, oberhalb bzw. in Dreieckanordnung zu diesen Zahnrädern 9,10 vorgesehen wird, so dass der Generator 48 sich eng neben den beiden Kolben-Zylindereinheiten der Maschine 1 befindet.

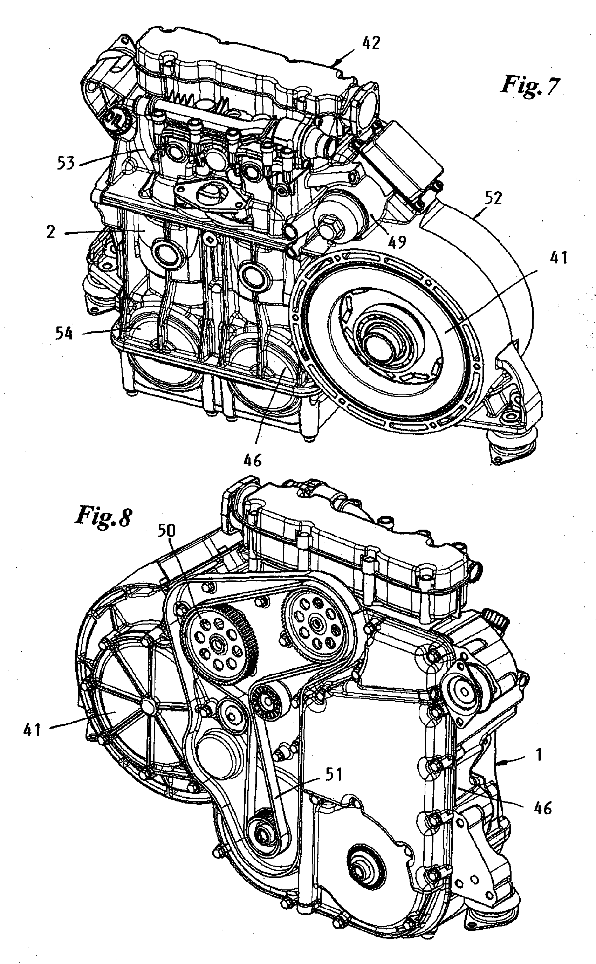

Um die Maschine 1 oder eine Maschinenkombination 42 oder 47 nach Fig.7 und 8 oder Fig.12 aufgrund ihrer kompakten Bauweise mit noch mehr konstruktiver und örtlicher Freiheit in einem Hybridfahrzeug einbauen zu können und eine die kompakte Bauweise erschwerende, untere Ölwanne zu vermeiden, ist die erfindungsgemässe Maschine vorzugsweise mit einer Trockensumpfschmierung ausgerüstet. Diese hat eine entsprechend den Darstellungen in Fig.6 bis 8 im oberen Bereich der Maschine 1 Pumpenkombination 49 aus Saug- und Druckpumpe, die über ein Zahnrad 50 angetrieben wird, das sich mit einem Zahnriementrieb 51 in Eingriff befindet. Die erforderlichen Saug- und Druckkanäle der Trockensumpfschmierung sind im gegossenen Maschinengehäuse 2, 52 eingeformt.

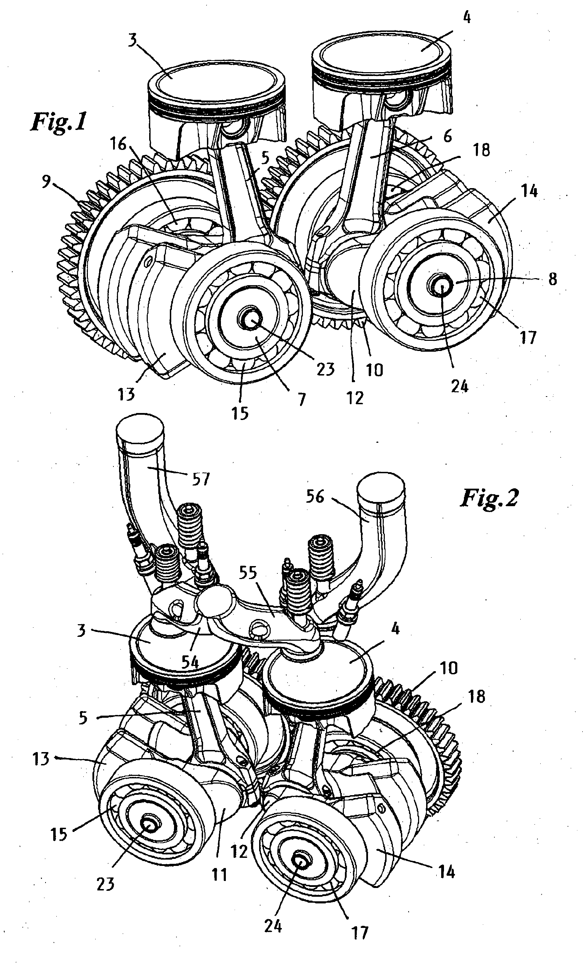

Weiterhin ist das für die Maschine 1 oder die Maschinenkombination 42 vorgesehene Gehäuse 2, 46, 52 vorteilhaft einschliesslich des Zylinderkopfes 53 und einen Teil des Kurbelgehäuses 54 aus einem Gusstück aus Leichtmetall mit eingeformter Graugussauskleidung der Zylinderflächen geformt, so dass eine Zylinderkopfdichtung mit Zylinderkopfschrauben vermieden wird. Dabei werden die Abgasrohre 54,55 beider Zylinder entsprechend den schematischen Darstellungen in Fig.2 und Fig.3 innerhalb dieses einheitlichen Gussteiles zusammengeführt und die Ansaugrohre 56,57 der Zylinder 21,22 schräg zum Zylinderkopf geführt, so dass die Verwirbelung der Verbrennungsluft innerhalb des Verbrennungsraumes begünstigt wird. Für eine den Verbrennungsablauf begünstigende Doppelzündung sind bei Ausführung als Benzinmotor für jeden Zylinder 21,22 zwei Zündkerzen 58 bis 61 vorgesehen.

Neben dem üblichen, nicht näher dargestellten Kanalsystem für die Zirkulation eines Kühlmediums zur Steuerung der Maschinentemperatur hat die Maschine entsprechend der Darstellung in Fig.10 und Fig.11 eine äussere, zweischalige Umkleidung 62 aus einem thermisch isolierenden Material, so dass auch nach relativ langen Betriebsunterbrüchen ein Kaltstart vermieden wird. Ausserdem trägt eine solche thermische Isolierung zur Reduzierung von Arbeitsgeräuschen der Maschine bei. Für die Aufrechterhaltung eines Mindestwertes der Betriebstemperatur kann ausserdem dieser thermisch isolierende Gehäusemantel 62 ein Heizsystem mit elektrischer Energiezufuhr aufweisen.

## Patentansprüche

1. Maschinenkombination mit einer Verbrennungskraftmaschine und einem Generator für die Aufladung der Batterie eines Hybridantriebs, wobei die Verbrennungskraftmaschine (1) ein Paar von in einem gemeinsamen Gehäuse eingeschlossenen Zylinder-Kolbeneinheiten aufweist, dessen beide Kolben (3,4) über eine Pleuelstange (5,6) mit je einer eigenen Kurbelwelle (7,8) in Antriebsverbindung stehen und die beiden Kurbelwellen (7,8) über je ein Zahnrad (9,10) gegenläufig miteinander drehverbunden sind,
**dadurch gekennzeichnet, dass**
die Antriebsübertragung von den Kurbelwellen (7,8) der Verbrennungskraftmaschine (1) auf die Antriebswelle des Generators (41, 48) über in gleicher Ebene angeordnete Zahnräder (10,43,45) erfolgt, beide Zylinder-Kolbeneinheiten mit dem Generator (41) in einer Reihe angeordnet sind und die Maschinenkombination (42) in einem gemeinsamen Gehäuse (46) eingeschlossen ist, wobei der Zylinderkopf (53), das für beide Kurbelwellen vorgesehene Kurbelgehäuse (54) und das Gehäuse (52) des Generators (41) als einheitliches Gussstück geformt sind.

2. Maschinenkombination nach Anspruch 1,
**dadurch gekennzeichnet, dass**
sie in einem thermisch isolierenden Gehäusemantel (62) eingeschlossen ist.

3. Maschinenkombination nach Anspruch 2,
**dadurch gekennzeichnet, dass**
ihr Gehäusemantel (62) zur Aufrechterhaltung einer Betriebstemperatur in einem vorgegebenen Bereich, an ein thermostatisch gesteuertes Heizsystem mit elektrischer Energiezufuhr angeschlossen ist.

4. Maschinenkombination nach einem der Ansprüche 1 bis 3,
**dadurch gekennzeichnet, dass**
zum Ausgleich von Massenkräften der Verbrennungskraftmaschine (I) die Position der Kurbel (11, 12) einer der Kurbelwellen (7, 8) gegenüber derjenigen der anderen Kurbelwelle um 180° versetzt ist, die Arbeitstakte beider Zylinder-Kolbeneinheiten im Abstand von einer 360° Kurbelwellendrehung aufeinander folgen und die geometrischen Achsen beider Zylinder-Kolbeneinheiten sich in einer gemeinsamen, sich senkrecht zu den Kurbelwellen (7,8) erstreckenden, ersten Ebene befinden und auch die Umlaufbahn von jeweils zwei Ausgleichsgewichten (13,14) beider Kurbelwellen (7,8) jeweils in derselben, zu erster Ebene parallelen Ebene verläuft wie die Ausgleichsgewichte (14) der anderen Kurbelwelle (8,7).

5. Maschinenkombination nach Anspruch 4,
**dadurch gekennzeichnet, dass**
die Ebenen, in denen sich die Umlaufbahnen der Ausgleichsgewichte (13,14) der Kurbelwellen (7,8) beider Zylinder-Kolbeneinheiten (3,4) erstrecken, spiegelsymmetrisch zu einer Ebene verlaufen, in der sich beide Pleuelstangen (5,6) bewegen.

6. Maschinenkombination nach Anspruch 4 oder 5,
**dadurch gekennzeichnet, dass**
die zueinander parallelen Zylinderachsen (19,20) zur Bildung einer nach innen gerichteten Schränkung einen geringeren Abstand voneinander haben als dem Abstand zwischen den Achsen beider Kurbelwellen (7,8) entspricht.

7. Maschinenkombination nach einem der Ansprüche 1 bis 6,
**dadurch gekennzeichnet, dass**
die jeweils einer Zylinder-Kolbeneinheit zugeordneten Kurbelwellen (7,8) in jeweils zwei Wälzlagern (15-18) gelagert sind.

8. Maschinenkombination nach einem der Ansprüche 1 bis 7,
**dadurch gekennzeichnet, dass**
für die Steuerung von je zwei Ventilen (25-28) beider Zylinder-Kolbeneinheiten eine gemeinsame Nockenwelle (30) mit zwei jeweils auf Kipphebel (37-40) wirkenden Nocken (31, 32) vorgesehen ist.

9. Maschinenkombination nach einem der Ansprüche 1 bis 8,
**dadurch gekennzeichnet, dass**
sie drosselklappenfrei für einen Volllastbetrieb ausgeführt ist, wobei ihr Betriebszustand durch ihre in Abhängigkeit von der Leistungsaufnahme der stromerzeugenden Elektromaschine gesteuerte Treibstoffzufuhr bestimmt ist.

10. Maschinenkombination nach einem der Ansprüche 1 bis 9,
**dadurch gekennzeichnet, dass**
für ihre Versorgung mit Schmieröl das Kanalsystem einer Trockensumpfschmierung mit einem im Gehäuse integrierten Öltank und einer Saug- und Druckpumpe (49) vorgesehen ist.

## Claims

1. A machine combination comprising an internal combustion engine and a generator for charging the battery of a hybrid drive, the internal combustion engine (1) having a pair of cylinder-piston units which are enclosed in a common housing, the two pistons (3, 4) of which are in each case drive-connected to a dedicated crankshaft (7, 8) via a connecting rod (5, 6), and the two crankshafts (7, 8) are rotationally connected to one another so as to rotate in opposite directions via in each case one gearwheel (9, 10),
**characterized in that**
the drive is transmitted from the crankshafts (7, 8) of the internal combustion engine (1) to the drive shaft of the generator (41, 48) via gearwheels (10, 43, 45) arranged in the same plane, the two cylinder-piston units are arranged in a row with the generator (41) and the machine combination (42) is enclosed in a common housing (46), with the cylinder head (53), the crankcase (54) provided for the two crankshafts and the housing (52) of the generator (41) being formed as an integral casting.

2. The machine combination according to claim 1,
**characterized in that**
the machine combination is enclosed in a thermally insulating housing shell (62).

3. The machine combination according to claim 2,
**characterized in that**
the housing shell (62) thereof is connected to a thermostatically controlled heating system with electric energy supply in order to maintain an operating temperature within a predefined range.

4. The machine combination according to any one of claims 1 to 3,
**characterized in that**
for balancing inertial forces of the internal combustion engine (1), the position of the cranks (11, 12) of one of the crankshafts (7, 8) is offset by 180° with respect to that of the other crankshaft, the work cycles of the two cylinder-piston units follow one another at a spacing of 360° of crankshaft rotation and the geometric axes of both cylinder-piston units are situated in a common first plane that extends perpendicular to the crankshafts (7, 8), and the circular path of in each case two balancing weights (13, 14) of the two crankshafts (7, 8) also runs in each case in the same plane, which is parallel to the first plane, as the balancing weights (14) of the other crankshaft (8, 7).

5. The machine combination according to claim 4,
**characterized in that**
the planes in which the circular paths of the balancing weights (13, 14) of the crankshafts (7, 8) of the two cylinder-piston units (3, 4) extend, run mirror-symmetrically to a plane in which the two connecting rods (5, 6) move.

6. The machine combination according to claim 4 or 5,
**characterized in that**
for forming an inwardly directed offset, the cylinder axes (19, 20) which are parallel to one another are at a smaller spacing from one another than corresponds to the spacing between the axes of the two crankshafts (7, 8).

7. The machine combination according to any one of claims 1 to 6,
**characterized in that**
the crankshafts (7, 8) associated in each case with a cylinder-piston unit are in each case mounted in two antifriction bearings (15 - 18).

8. The machine combination according to any one of the claims 1 to 7,
**characterized in that**
a common camshaft (30) with two cams (31, 32) which act in each case on rocker arms (37 - 40) is provided for controlling in each case two valves (25 - 28) of the two cylinder-piston units.

9. The machine combination according to any one of claims 1 to 8,
**characterized in that**
the machine combination is configured without throttle valves for full load operation, the operating state thereof being determined by its fuel supply which is controlled as a function of the power consumption of the current-generating electric machine.

10. The machine combination according to any one of claims 1 to 9,
**characterized in that**
for the supply thereof with lubricating oil, the channel system of a dry sump lubrication system is provided with an oil tank integrated in the housing and with a suction and pressure pump (49).

## Revendications

1. Combinaison de machines comprenant un moteur à combustion interne et un générateur pour la charge de la batterie d'un entraînement hybride, pour laquelle le moteur à combustion interne (1) comporte une paire d'unités cylindre-piston insérées dans un carter commun, dont les deux pistons (3, 4) sont en liaison d'entraînement au moyen d'une bielle (5, 6) avec chacun un vilebrequin propre (7, 8) et les deux vilebrequins (7, 8) sont reliés en rotation l'un à l'autre en sens opposé respectivement par un engrenage (9, 10),
**caractérisé en ce que**
la transmission d'entraînement a lieu par les vilebrequins (7, 8) du moteur à combustion interne (1) à l'arbre de transmission du générateur (41, 48) au moyen d'engrenages (10, 43, 45) disposés dans le même plan, les deux unités cylindre-piston sont disposées en ligne avec le générateur (41) et la combinaison de machines (42) est insérée dans un carter commun (46), pour laquelle la culasse (53), le carter de vilebrequin (54) prévu pour les deux vilebrequins et le carter (52) du générateur (41) sont formés en tant que pièce moulée homogène.

2. Combinaison de machines selon la revendication 1,
**caractérisée en ce qu'**
elle est incorporée dans une enveloppe de carter (62) thermiquement isolée.

3. Combinaison de machines selon la revendication 2,
**caractérisée en ce que**
son enveloppe de carter (62) est raccordée à un système de chauffage thermostatiquement piloté avec alimentation en énergie électrique afin de maintenir une température de fonctionnement dans une gamme préalablement définie.

4. Combinaison de machines selon l'une quelconque des revendications 1 à 3,
**caractérisée en ce que**
la position de la manivelle (11, 12) d'un des vilebrequins (7, 8) est décalée de 180° par rapport à celle de l'autre vilebrequin pour équilibrer les forces d'inertie du moteur à combustion interne (1), les cadences de fonctionnement des deux unités cylindre-piston se succèdent à un intervalle d'une rotation de vilebrequin de 360° et les axes géométriques des deux unités cylindre-piston se trouvent dans un premier plan commun s'étendant perpendiculairement aux vilebrequins (7, 8) et la trajectoire périphérique également de respectivement deux masses d'équilibrage (13, 14) des deux vilebrequins (7, 8) passe dans le même plan parallèle au premier plan que la masse d'équilibrage (14) de l'autre vilebrequin (8, 7).

5. Combinaison de machines selon la revendication 4,
**caractérisée en ce que**
les plans dans lesquels s'étendent les trajectoires périphériques des masses d'équilibrage (13, 14) des vilebrequins (7, 8) des deux unités cylindre -piston (3, 4) passent de façon symétrique à un plan dans lequel les deux bielles (5, 6) se déplacent.

6. Combinaison de machines selon la revendication 4 ou 5,
**caractérisée en ce que**
les axes de cylindres (19, 20) parallèles l'un à l'autre ont, pour former un décalage du banc de cylindres dirigé vers l'intérieur, un intervalle plus faible l'un par rapport à l'autre que celui qui correspond à l'intervalle entre les axes des deux vilebrequins (7, 8).

7. Combinaison de machines selon l'une quelconque des revendications 1 à 6,
**caractérisée en ce que**
les vilebrequins (7, 8) affectés respectivement à une unité cylindre-piston sont logés respectivement dans deux paliers à roulement (15 - 18).

8. Combinaison de machines selon l'une quelconque des revendications 1 à 7,
**caractérisée en ce qu'**
un arbre à cames commun (30) est prévu avec respectivement deux cames (31, 32) agissant sur les culbuteurs (37 - 40) pour le pilotage de chacune des deux soupapes (25 - 28) des deux unités cylindre-piston.

9. Combinaison de machines selon l'une quelconque des revendications 1 à 8,
**caractérisée en ce qu'**
elle est exécutée sans papillon pour un fonctionnement à pleine charge, pour laquelle son état de fonctionnement est déterminé par son alimentation en carburant pilotée en fonction de la puissance absorbée de la machine électrique produisant du courant.

10. Combinaison de machines selon l'une quelconque des revendications 1 à 9,
**caractérisée en ce que**
pour son alimentation en huile de lubrification, le système de conduits d'un graissage à carter sec est prévu avec un réservoir d'huile intégré au carter et une pompe aspirante et refoulante (49).
